(19) Europäisches Patentamt
European Patent Office
Office européen des brevets

(11) **EP 2 975 560 A1**

(12) **EUROPEAN PATENT APPLICATION**

(43) Date of publication:
**20.01.2016 Bulletin 2016/03**

(51) Int Cl.:
**G06Q 10/02** (2012.01)

(21) Application number: **14290203.0**

(22) Date of filing: **14.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Amadeus S.A.A.**
**06410 Biot (FR)**

(72) Inventors:
• **Falkowska, Aleksandra**
**06600 Antibes (FR)**

• **Hjije, Amal**
**06560 Valbonne (FR)**
• **Ramon, Carolina**
**06000 Nice (FR)**
• **Bardin, Sebastien**
**06610 Le Cannet (FR)**
• **Despoix, Celine**
**06270 Villeneuve Loubet (FR)**

(74) Representative: **Samson & Partner Patentanwälte mbB**
**Widenmayerstraße 6**
**80538 München (DE)**

(54) **Automated flight exchange for low cost carriers**

(57) A method, apparatus and program product perform re-pricing operations for low cost carrier travel itineraries in connection with itinerary changes in a manner that is compatible with systems and/or workflows utilized for standard carriers. Re-pricing operations may include, for example, access to a pricing engine for a low cost carrier to retrieve pricing information for a changed travel itinerary, along with the generation of one or more pricing records and the population of a passenger name record for the travel itinerary using the retrieved pricing information.

FIG. 1

## Description

### Field of the Invention

Embodiments of the invention relate generally to computers and computer software, and more specifically, to the use of computers and computer software to handle exchanges of travel products in the travel industry.

### Background of the Invention

Computer reservations systems are used in the travel industry to store and retrieve information and conduct transactions related to air travel, rail travel, hotels, car rental, and other travel-related activities. In particular, third party reservation agents, such as travel agents, and/or customers (e.g., travelers) often utilize computer based devices to interface with a reservation system, such as a Global Distribution System (GDS), to book travel arrangements and/or travel related services for the customer.

An important component of such systems is related to ticketing, which is the process of issuing and managing tickets, the documents issued by travel providers to confirm a traveler's purchase of a travel product such a seat on a flight on an aircraft. Documents managed by an electronic ticketing system for use with air travel, for example, may include paper tickets, electronic tickets (e-tickets), and Electronic Miscellaneous Documents (EMD's), the latter of which are used to document ancillary revenue for services such as excess baggage fees, on-board food and services, and other services that are beyond the scope of the an electronic ticket for a flight between an origin and a destination. In addition, for a variety of reasons, travelers' plans may change after tickets have been issued. As such, computer reservations systems may also support additional transactions that alter, e.g., by adding, modifying and/ or canceling, various travel-related products and/or services after an initial booking by a traveler.

Conventionally, and particularly with respect to air travel, a segment of the travel industry operates under a low cost model that differs in a number of respects from a more traditional, standard model. With air travel, for example, low cost carriers (LCC's) generally offer budget or discount fares with fewer services and/or comforts than standard carriers (often referred to as "full service carriers"). Furthermore, from a systems standpoint, low cost carriers generally don't rely on the fare pricing services supplied by Airline Tariff Publishing Company (APTCo), as do standard carriers. As a result, transactions with low cost carriers are often handled through different computer systems, and using different rules and workflows.

It has been found, however, that the separate nature in which low cost carriers are treated relative to standard carriers can be a burden to many users, e.g., travel agents and/or travelers, due to the need to understand and utilize separate systems and workflows. It has also been found that handling changes in traveler itineraries for low cost carriers is particularly burdensome due to many of these reasons.

### Summary of the Invention

The invention addresses these and other problems associated with the prior art by providing an apparatus, program product and method capable of performing re-pricing operations for low cost carrier travel itineraries in connection with itinerary changes in a manner that is compatible with systems and/or workflows utilized for standard carriers. Re-pricing operations may include, for example, access to a pricing engine for a low cost carrier to retrieve pricing information for a changed travel itinerary, along with the generation of one or more pricing records and the population of a passenger name record for the travel itinerary using the retrieved pricing information.

Therefore, according to one aspect of the invention, re-pricing of a low cost carrier travel itinerary may include accessing a pricing engine of the low cost carrier to retrieve pricing information for at least one changed element in the low cost carrier travel itinerary, and generating at least one pricing record and populating a passenger name record associated with the low cost carrier travel itinerary using the retrieved pricing information.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there are described example embodiments of the invention.

### Brief Description of the Drawings

FIGURE 1 is a block diagram of one or more reservation systems, inventory systems, low cost carrier systems and travel reservation devices consistent with embodiments of the invention.

FIGURE 2 is a block diagram of a reservation system of Fig. 1.

FIGURE 3 is a flowchart that illustrates a sequence of operations that may be performed by at least one processor of the reservation system of Fig. 2 to interact with a low cost carrier system when performing an itinerary change.

FIGURE 4 is a block diagram of components in the reservation system of Fig. 2 and a sequence of operations that may be performed by at least one processor of the reservation system during a re-pricing operation consistent with the invention.

FIGURE 5 is an example user interface output that may be generated in response to an example re-pricing operation consistent with the invention, and for a single passenger.

FIGURE 6 is an example user interface output that may be generated in response to an example re-pricing operation consistent with the invention, and for multiple passengers.

FIGURE 7 is a sequence diagram that illustrates a sequence of operations that may be performed by at least one processor of the reservation system of Fig. 2 during a re-pricing operation consistent with the invention.

FIGURES 8-19 are representative textual displays illustrating an example change of travel itinerary operation.

**Detailed Description**

Embodiments consistent with the invention perform re-pricing operations for low cost carrier travel itineraries in connection with itinerary changes in a manner that is compatible with systems and/or workflows utilized for standard carriers. Re-pricing operations may include, for example, access to a pricing engine for a low cost carrier to retrieve pricing information for a changed travel itinerary, along with the generation of one or more pricing records and the population of a passenger name record for the travel itinerary using the retrieved pricing information.

An itinerary change, in this regard, refers to a change in the travel itinerary of one or more travelers that results in a change in one or more elements associated with the travel itinerary. Each element in a travel itinerary may be associated with a particular travel product. With respect to air travel, for example, an element may be associated with a flight segment. In other applications, however, elements may be associated with other travel products and/or services, such as lodging, rental cars, or other modes of transportation such as travel via road, rail, or water. Other travel products and/or services capable of being associated with an itinerary, and thus capable of being "changed" within the context of the invention, will be appreciated by those of ordinary skill in the art having the benefit of the instant disclosure. In addition, it will be appreciated that a change in an element may be associated with modification of an element, as well as addition of a new element or cancelation or removal of an element, or any combination thereof.

A low cost carrier travel itinerary, in this regard, refers to a travel itinerary in which one or more elements thereof is provided with or otherwise associated with a low cost carrier. It will be appreciated, however, that a low cost carrier travel itinerary may include one or more elements that are not associated with a low cost carrier, e.g., one or more elements associated with a standard carrier.

Among other benefits, various embodiments of the invention facilitate more seamless process for reissuing tickets in association with changes of itineraries for low cost carriers by responding to re-pricing requests in a manner that returns fares, taxes, costs, fees, penalties, etc. in a format that is compatible with existing processes for standard carriers. In some embodiments, new pricing records (e.g., Transitional Stored Ticket (TST) records and/or Transitional Stored Miscellaneous (TSM) records) maybe automatically created, old document elements (FO elements) and/or credit card elements (SVC elements) may be generated, and/or fare calculations may be generated in pricing records.

Other variations and modifications will be apparent to one of ordinary skill in the art.

Hardware and Software Environment

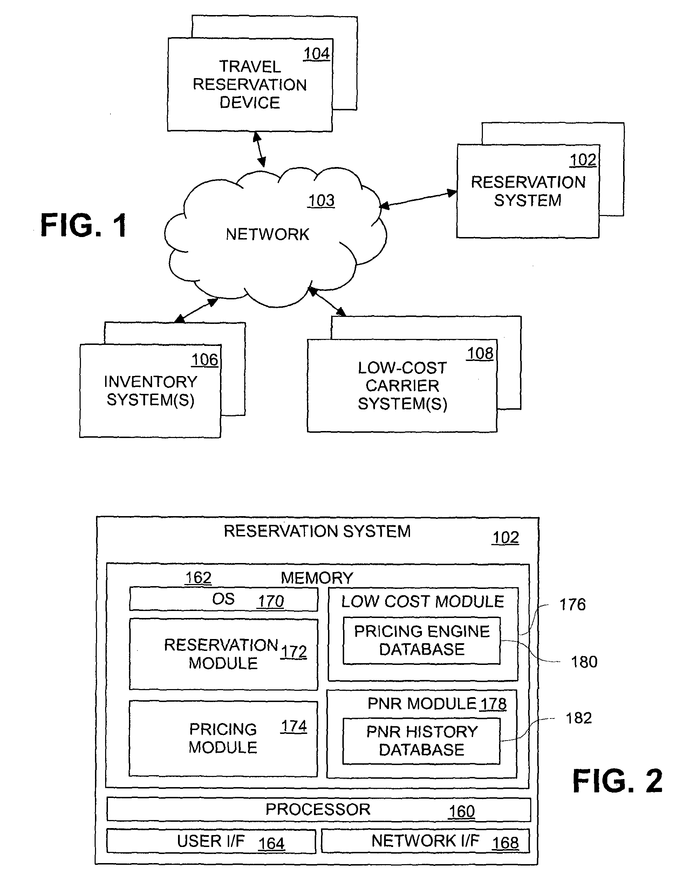

Turning now to the drawings, wherein like numbers denote like parts throughout the several views, Fig. 1 illustrates one or more devices and/or systems that may be used to implement the various features of the invention in terms of handling travel product exchanges for low cost travel carriers. In general, a low cost carrier corresponds to a travel provider (such as an airline) that provides discount or budget fares with fewer services and/or comforts (e.g., Southwest Airlines, EasyJet, Frontier Airlines, etc.). Based at least in part on the lower cost nature of the travel provider, inventory systems associated with such low cost carriers may limit transactions for reserving travel inventory items to support a lower cost business model utilized by the low cost carrier. For example, a travel inventory item provided by a low cost carrier (i.e., a low cost travel inventory item) may be reserved in a transaction that requires payment to be successful to complete the reservation. For the low cost carrier, no documents are issued, and the contract between the passenger and the low cost carrier may be emailed to the passenger. In general, this booking process differs from the standard booking process employed by standard travel merchants that interface with a reservation system.

As shown in Fig. 1, a reservation system 102 may be implemented as one or more servers. The reservation system 102 may be connected to a communication network 103, where the communication network 103 may comprise the Internet, a local area network (LAN), a wide area network (WAN), a cellular voice/data network, one or more high speed bus connections, and/or other such types of communication networks. A travel reservation device 104 may be connected to the communication network 103, such that a reservation agent (e.g., travel agency, traveler, or other such travel reservation service) may initialize a reservation session with the reservation system 102 to communicate a booking request and/or other such relevant data to the reservation system 102. The travel reservation device 104 may be a personal computing device, desktop computer, laptop computer, tablet computer, thin client terminal, smart phone and/or other such computing device.

One or more servers for one or more inventory systems 106 of one or more travel merchants and one or more low cost carrier systems 108 may also be connected to the communication network 103. The reservation system 102 may initialize an inventory session over the communication network 103 with each inventory system 106 and/or low cost carrier system 108 for which a travel inventory item is to be booked. Consistent with embodiments of the invention, a reservation agent may interface with the reservation system 102 using the travel reservation device 104 in a reservation session to provide data for a booking request. In turn, the reservation system interfaces with each inventory system 106 of each travel merchant and/or low cost carrier system 108 that provides a travel inventory item needed for the booking request in an inventory session. Moreover, while the reservation system 102, inventory system 106, and/or low cost carrier system 108 are described herein as separate entities, the invention is not so limited. In some embodiments, various hardware, software components, and/or sequences of operations described with respect to the reservation system 102, inventory system 106, and/or low cost carrier system 108 may be implemented on the reservation system 102, inventory system 106, and/or low cost carrier system 108. Furthermore, as will be appreciated, in some embodiments the reservation system 102, inventory system 106, and/or low cost carrier system 108 may be components of a Global Distribution System (GDS).

As discussed, a low cost carrier system 108 may interface with the reservation system 102 in a limited reservation session as compared to an inventory system 106 corresponding to a standard travel provider (i.e., a non-low cost carrier), where the limited reservation session generally corresponds to a limited number of transaction types supported by the low cost carrier system 108. For example, when interfacing with the reservation system 102, the low cost carrier system 108 may recognize one or more terms of a transaction request (e.g., a commit request) communicated to the low cost carrier system 108. Such terms may include, for example: a commit verb that may be used to create a reservation (i.e., book one or more low cost travel inventory items) in the low cost carrier system 108, a get booking status verb that may be used to check the status of a reservation in the low cost carrier system 108, and/or a recommit verb that may be used to update an existing reservation in the low cost carrier system 108.

Similarly, the outcome of a reservation session for low cost carrier system 108 (i.e., the booking of a travel inventory item of a low cost carrier) generally differs from the outcome of a reservation session for a standard inventory system 106. For example, low cost carriers generally provide "ticketless travel", where an International Air Transport Association (IATA) ticket number is not assigned for a booked low cost travel inventory item, and contract documents are not communicated to the reservation system 102 but are instead communicated to an email address of the traveler. Furthermore, the low cost carrier system 108 may communicate only a record locator to a requesting system, where the record locator corresponds to a reservation record stored in the low cost carrier system 108 for one or more reserved low cost travel inventory items. In addition, the types of transactions that a low cost carrier system may process are limited based in part on the low cost model of the low cost carrier. For example, a low cost carrier system 108 may include one or more terms in a response to a transaction request. Such terms may include, for example: a successful reply that indicates that a reservation has been created/updated in the low cost carrier system 108 and payment authorization has been received, a failing reply that indicates that a requested reservation has not been created in the low cost carrier system 108, and/or a pending reply that indicates that the low cost carrier system 108 has not yet received a payment authorization status such that the reservation is not yet complete.

In some conventional systems, due to the differences between reservation sessions for the standard inventory system 106 and the low cost carrier system 108, these conventional reservation systems may not be able to interface with both standard inventory systems 106 and low cost carrier systems 108. Therefore, when booking low cost travel inventory items, a reservation agent may resort to separately reserving travel inventory items of low cost carriers (i.e., low cost travel inventory items) through a dedicated interface, such as an interface provided by a dedicated internet website. Separately booking such low cost travel inventory items may lead to further difficulty managing reservations, since travel inventory items not booked using the reservation system may not be available for the travel agent to modify, cancel, rebook, etc. by interfacing with the reservation system 102 using a travel reservation device 104. In addition, since the booking of low cost travel inventory items may not be performed by a conventional reservation system, reservation and sales related information for booked low cost travel inventory items for reservation agents may not be available to the conventional reservation system for collection, analysis, sales reporting, and payment reconciliation (e.g., credit card reconciliation).

A reservation system 102 consistent with some embodiments of the invention, however, may be configured to interface with standard inventory systems 106 as well as low cost carrier systems 108 to reserve travel inventory items and/or low cost travel inventory items. Moreover, these embodiments of the invention may be configured manage reserved travel inventory items and/or low cost travel inventory items. Therefore, any differences between managing and reserving standard travel inventory items and reserving and managing low cost travel inventory items may appear transparent to a reservation agent using a travel reservation device 104 to interface with a reservation system 102 consistent with embodiments of the invention. Moreover, a reservation system 102 consistent with embodiments of the invention may collect and report reservation and sales related information for reserved low cost travel inventory items for a reservation agent in addition to reserved standard travel inventory items. Therefore, embodiments of the invention provide a reservation system that includes an integrated interface that facilitates the reservation and management of standard travel inventory items and low cost travel inventory items.

Turning now to Fig. 2, this figure provides a block diagram that illustrates the components of the one or more servers of the reservation system 102. The reservation system 102 includes at least one processor 160 including at least one hardware-based microprocessor and a memory 162 coupled to the at least one processor 160. The memory 162 may represent the random access memory (RAM) devices comprising the main storage of reservation system 102, as well as any supplemental levels of memory, e.g., cache memories, non-volatile or backup memories (e.g., programmable or flash memories), read-only memories, etc. In addition, memory 162 may be considered to include memory storage physically located elsewhere in the reservation system 102, e.g., any cache memory in a microprocessor, as well as any storage capacity used as a virtual memory, e.g., as stored on a mass storage device or on another computer coupled to the reservation system 102.

For interface with a user or operator, the reservation system 102 may include a user interface 164 incorporating one or more user input/output devices, e.g., a keyboard, a pointing device, a display, a printer, etc. Otherwise, input may be received via another computer or terminal (e.g., the inventory system 106, the low cost carrier system 108, and/or the travel reservation device 104) over a network interface 168 coupled to the communication network 103. The reservation system 102 also may be in communication with one or more mass storage devices, which may be, for example, internal hard disk storage devices, external hard disk storage devices, external databases, storage area network devices, etc.

The reservation system 102 typically operates under the control of an operating system 170 and executes or otherwise relies upon various computer software applications, components, programs, objects, modules, engines, data structures, etc., including for example, a reservation module 172, a pricing module 174, a low cost module 176, and a Passenger Name Record (PNR) module 178. In general, the reservation module 172 may be configured to generate a reserved travel booking based on received booking data. The reservation module 172 may receive booking data from a travel reservation device 104, and the reservation module 172 may interface with one or more inventory systems 106 and/or low cost carrier systems 108 to reserve travel inventory items managed by the inventory systems 106/low cost carrier systems 108. The pricing module module 174 may be generally configured to respond to pricing requests for both standard and low cost carrier travel inventory items.

The low cost carrier module 176 is generally configured to format transaction requests and responses between the reservation system 102 and a low cost carrier system, and for the purposes of handling travel product exchanges, module 176 is further configured to manage and convert pricing requests for low cost travel inventory items, and the low cost module includes a pricing engine database (e.g., an XML Distribution Platform (XDP) database) 180 that functions as a backend database for the low cost module. PNR module 178 is configured to manage access to a PNR history database 182 to facilitate detection of modifications made to a traveler itinerary.

Various additional applications, components, programs, objects, modules, etc. may also execute on one or more processors in another computer coupled to the reservation system 102 via the communication network 103, e.g., in a distributed or client-server computing environment, whereby the processing required to implement the functions of a computer program may be allocated to multiple computers over a network. For example, some of the functionality described herein as being incorporated into a travel and reservation system 102 may be implemented in one or more servers.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

Such computer readable media may include computer readable storage media and communication media. Computer readable storage media is non-transitory in nature, and may include volatile and non-volatile, and removable and non-removable media implemented in any method or technology for storage of information, such as computer-readable instructions, data structures, program modules or other data. Computer readable storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium that can be used to store the desired information and which can be accessed by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

Various program code described hereinafter may be identified based upon the application within which it is implemented in a specific embodiment of the invention. However, it should be appreciated that any particular program nomenclature that follows is used merely for convenience, and thus the invention should not be limited to use solely in any specific application identified and/or implied by such nomenclature. Furthermore, given the typically endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the invention is not limited to the specific organization and allocation of program functionality described herein.

Those skilled in the art will recognize that the example environment illustrated in Figs. 1 and 2 is not intended to limit the present invention. Indeed, those skilled in the art will recognize that other alternative hardware and/or software environments may be used without departing from the scope of the invention.

Automated Flight Exchange For Low Cost Carriers

Conventional low cost carrier solutions are generally not integrated with standard carrier solutions, and generally rely on different entries, different tools and different processes compared to other standard carrier solutions. Among other reasons, the lack of stored travel documents conventionally utilized in standard carrier solutions has generally complicated this integration of low cost carrier solutions. Embodiments consistent with the invention, in contrast, address limitations related to the lack of such documents in low cost carrier models by supporting the calculation of the price for an exchange of a travel product, such as a flight, within the same framework as is used for standard carrier solutions.

Embodiments of the invention, in particular, focus calculating prices for changes in traveler itineraries, e.g., operations referred to as ticket exchanges in the airline industry, without reliance on ATPCo fare pricing services. Standard carrier ticket exchanges, e.g., as implemented using the Amadeus Ticket Changer (ATC) solution available from Amadeus S.A.S., the assignee of the present application, generally rely on ATPCo fare pricing services. For low cost carriers, however, fares are not filed with ATPCo, and the low cost carriers support their own pricing and re-pricing logic. As such, existing workflows, tools, entries and processes for performing ticket exchanges and re-pricing operations are generally incompatible with the low cost carrier model.

In embodiments consistent with the invention, however, re-pricing requests for low cost carriers incorporate accesses to one or more low cost carrier systems. Moreover, in some embodiments discussed hereinafter a similar re-pricing request workflow is supported for both standard carriers and low cost carriers, with the interface with a low cost carrier system being substantially transparent to a travel agent or other user performing a re-pricing request. While it will be appreciated that a system for implementing re-pricing requests and itinerary changes in a manner consistent with the invention may be dedicated solely to low cost carriers in some embodiments, the embodiments discussed hereinafter will focus on the integration of low cost carrier re-pricing requests and itinerary changes into a system that additionally supports standard carrier workflows as well. The invention, however, is not so limited.

Low cost carriers, also referred to as Ticketless Access Carriers (TLA Carriers), generally do not rely on tickets or EMDs as a model, but instead rely on Passenger Name Record (PNR) data instead. As such, low cost carrier systems generally do not have a ticketing and EMD server, and ticket/EMD data generally does not exist as such for access by a travel agent, as is the case with standard carriers. Thus, as standard carrier itinerary changes are generally based upon on tickets, in the illustrated embodiment, additional functionality is utilized to support itinerary changes for low cost carriers.

First, each booking for a low cost carrier is considered to be associated with a single PNR, and itinerary changes are implemented in part based upon a comparison of PNR images (i.e., snapshots taken at different points in time). Itinerary changes are therefore indicated by determining a change, or delta, between a current image of a booking and a last issued booking.

Second, no ticket and/or EMD server is generally used, and instead, a database is used to store committed PNR images to enable itinerary changes to be detected.

Third, functionality is incorporated to perform standard calculations of balances, penalties, residual values, etc., as well as to breakdown pricing responses returned from low cost carrier systems. Standard carriers, in particular, generally rely on ATPCo fare data (or fare data from another provider such as SITA) returned in an electronic format with encoded rules associated with fares, which has been found to make the information readily suitable for computer processing. ATPCo fare data is often broken down into elements such as fares, services, penalties, taxes, etc.

As noted above, however, low cost carriers generally do not rely on ATPCo fare data, but instead perform their own pricing with their own interfaces and calculation methods. As such, the illustrated embodiments implement such calculations, e.g., of balance, penalties, residual value, etc., in a reservation system.

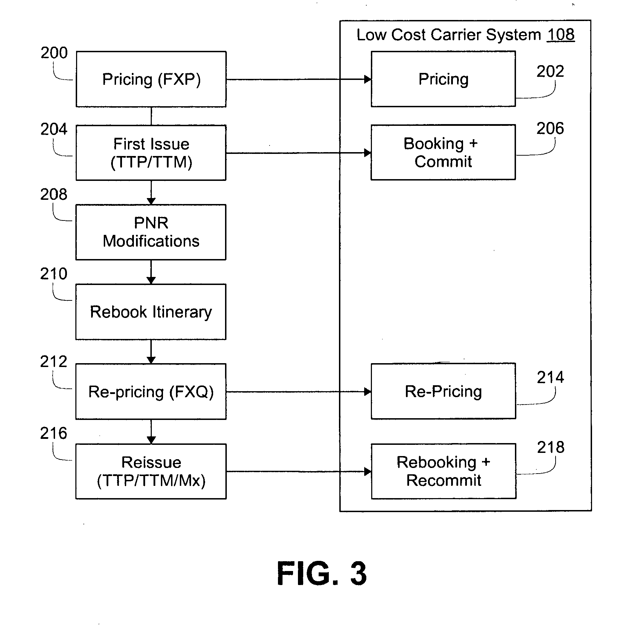

Now turning to Fig. 3, the flow and interaction with a low cost carrier system in connection with pricing itinerary modifications after a first commit of a reservation is illustrated. As illustrated on the left side of the figure, a travel agent or other user may initially price a travel product using an FXP command (block 200), which initiates a pricing request 202 in low cost carrier system 108. Then, a travel product may be booked and committed (first issue) using a TTP/TTM command (block 204), which initiates a booking and commit request 206 in low cost carrier system 108. These operations are described in more detail, for example, in U.S. Serial No. 14/079,035, filed November 13, 2013, which is incorporated by reference herein in its entirety.

Thereafter, as illustrated in block 208, modifications may be made to the itinerary after the initial booking, and in block 210, the itinerary may be rebooked. Then, as illustrated in block 212, a re-pricing request may be made, e.g., using an FXF (informative pricing for a reissue) or FXQ (confirm pricing for a reissue) command. This results in the generation of a re-pricing request 214 to low cost carrier system 108 to retrieve the pricing information, which is then broken down into pricing components and presented to the travel agent. The travel agent is then able to reissue the itinerary in block 216, e.g., using a TTP/TTM/Mx command, resulting in a rebooking and recommit operation 218 being performed in low cost carrier system 108.

Unlike some conventional low cost carrier implementations, partial pricing may be supported (e.g., to re-price an itinerary separately from services). In addition, informative pricing may be supported, thereby enabling a travel agent to modify and save a passenger record multiple times before a recommit. In addition, as opposed to standard carrier implementations, accesses to ticket/EMD servers and/or standard carrier pricing engines (which in turn generally rely on ATPCo filings) are bypassed.

In the illustrated embodiment, re-pricing data may be requested in response to an informative pricing command or entry and/or a confirm pricing command or entry. Informative pricing (e.g., via an FXF command or entry) does does not store and does not create any corresponding Transitional Stored Ticket (TST) record, while a confirm pricing command or entry may create and store reissue data and may create an issued in exchange element in a PNR (e.g., via an FXQ command or entry). In one embodiment, an FXQ entry may generate reissue TST(s), with the new routing and the new fare, additional collection(s) (if any), residual value(s) (if applicable), penalty fee(s) (if any), issued in exchange field(s) with original and previous document(s) number(s), credit card fees for low cost carriers (if any), and/or free services for low cost carriers (if any), among others.

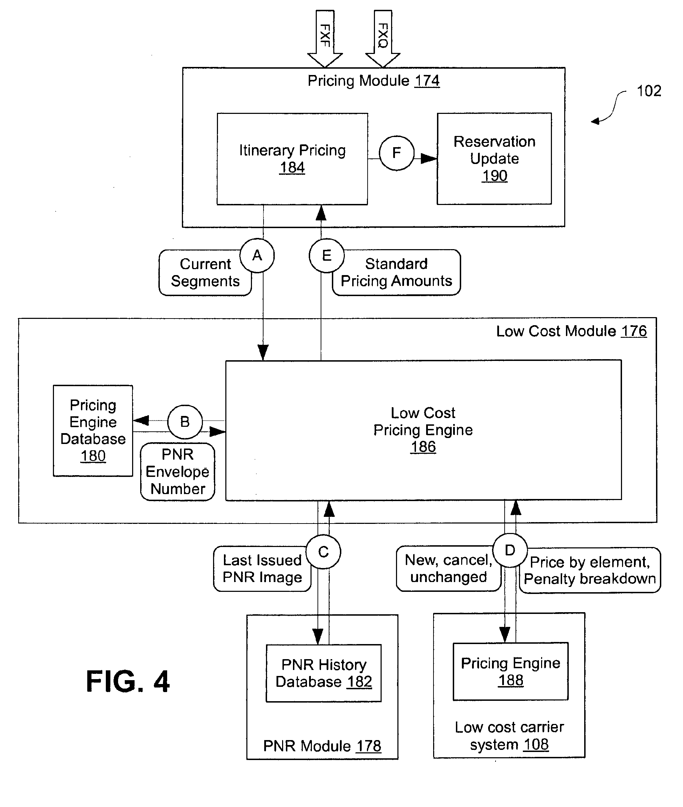

Now turning to Fig. 4, reservation system 102 is illustrated in greater detail, with a number of steps A-F represented to illustrate the flow of information between the various modules in the system when performing a re-pricing operation associated with a low cost carrier, e.g., in response to an FXF or FXQ command received by pricing module 174.

Step A, in particular, illustrates that in response to an FXF or FXQ command, an itinerary pricing component 184 of pricing module 174, which is additionally configured to handle standard carrier re-pricing requests, detects that the command is associated with at least one segment on a low cost carrier. In response, component 184 makes a call to low cost module 176, rather than attempting to access an ATPCo filing, and providing all flight segment(s) in the PNR to a low cost pricing engine 186 of low cost module 176.

Next, in steps B and C, as ticket information is generally not available for low cost carriers, the PNR modifications performed since the last issuance are determined for use in performing the re-pricing. Low cost pricing engine 186, in step B, retrieves a PNR envelope number (which is stored at issuance time) from pricing engine database 180, and then, in step C, provides that PNR envelope number to PNR history database 182 of PNR module 178 to retrieve the PNR image of the last issued booking. A comparison is then performed to identify any new, canceled, or otherwise changed elements in the travel itinerary since the last issuance of the PNR. In some embodiments, names comparison may also be performed to detect reservation name changes.

In one embodiment, pricing engine database 180 may include a PNR status table, a PNR issuance history table, and a ticket data table. The database may be updated at each issuance and reissuance operation, and read during issuance and re-pricing operations. The tables may be indexed, for example, by a record locator (RecLoc) number and a PNR creation date.

The PNR status table may include envelope number, status, first issuance envelope, and last issuance envelope fields, and may be used to store the envelope number of the last commit transaction, as well as its status (e.g., Pending, Success, Failed), which may be used at issuance time. The PNR envelope number may be used during re-pricing transactions (ATC, ASC, FXG post-issuance) to retrieve the PNR image from last issuance. The PNR issuance history table may include low cost carrier record locator, issuance date, officeID, city code and ticket references fields, and may be used to store the history of bookings for a PNR. A first issuance reference may be used for the creation of an old document (FO) element in an itinerary change process. The FO line may reference the original ticket number used for an exchange. The ticket data table may include issuance envelope number, ticket number, original ticket number, passenger reference, passenger name, and validating carrier fields, and may be used in a re-pricing process to build a new ticket.

Next, in step D, a pricing request may be built and sent to a pricing engine 188 of a low cost carrier system 108, which is generally external to the reservation system. Using the last issued booking images and the current booking image, low cost pricing engine 186 may build a pricing request with the following elements: a list of new elements relative to the last committed booking, a list of cancelled elements relative to the last committed booking, and/or a list of unchanged elements.

Next, in step E, low cost pricing engine returns itinerary change calculations in standard pricing formats for use by itinerary pricing component 184. Then, in step F, pricing module 174 prepares the traveler itinerary to be issued. Such preparation includes the reservation update component 190 updating the PNR with standard elements, e.g., SVC, FO and/or FP elements, creating pricing records (e.g., TST and/or TSM records), and updating fare calculations in the pricing records, in a similar manner as is performed for standard carriers. The re-pricing and itinerary change operations are then complete.

Returning to Step E, re-pricing calculations for low cost carriers, as noted above, are based upon pricing information returned by the pricing engine 188 of low cost carrier system 108. In general, however, the pricing information returned by a low cost airline is very basic, and any breakdowns of amounts generally do not match the standard breakdowns as are used for standard carriers via ATPCo filings, as the returned pricing is generally returned element by element.

Therefore, In order to provide a seamless output, additional calculations/processes may be implemented in the low cost module 176 in some embodiments, e.g., additional ticket data retrieved for the FO element creation, or free services and/or pricing by segments for use in building a fare calculation line. Doing so effectively converts the pricing information retrieved from the low cost carrier system into a format that is used in itinerary change operations for standard carriers.

As a further illustration of these additional calculations/processes, consider a standard use case where, for each segment, an airline sends the fare (including taxes) and taxes amount. Base fare may be calculated by deducting the tax amount from the received fare amount. Thus, for example, the received pricing data may include the following items:

<u>Segment Unchanged</u> = Original fare (SU), taxes (TU)

<u>Segment Cancelled</u> = - Original fare (SX), - original taxes (TX)

<u>Segment New</u> = New Fare (SN), taxes (TN)

<u>Penalty amount (PEN)</u>

<u>Non-refundable amount (NEQ)</u>

## Non-refundable tax amount (NTA)

Based upon these items, the following amounts may be calculated in association with a re-pricing request to generate pricing data suitable for use in connection with standard carrier pricing processes and formats:

$$\text{Old base fare (issue base amount):} \quad IBA = |SX| + SU$$

$$\text{New base fare (reissue base amount):} \quad RBA = SU + SN$$

$$\text{Fare balance (balance net fare amount):} \quad BNE = RBA - IBA + NEQ$$

$$\text{Old tax amount (issue tax amount):} \quad ITA = |TX| + TU$$

$$\text{New tax amount (reissue tax amount):} \quad RTA = TU + TN$$

$$\text{Tax balance (balance tax amount):} \quad BTA = RTA - ITA + NTA$$

$$\text{Ticket difference (Balance Ticket total amount):} \quad BTO = BNE + BTA$$

$$\text{Grand total (Balance ticket grand total amount):} \quad BGT = BTO + PEN$$

$$\text{Total Additional Collection:} \quad TAC = \text{Max}(BTO, 0) + PEN$$

$$\text{Residual Value:} \quad RES = \text{Min}(BTO, 0)$$

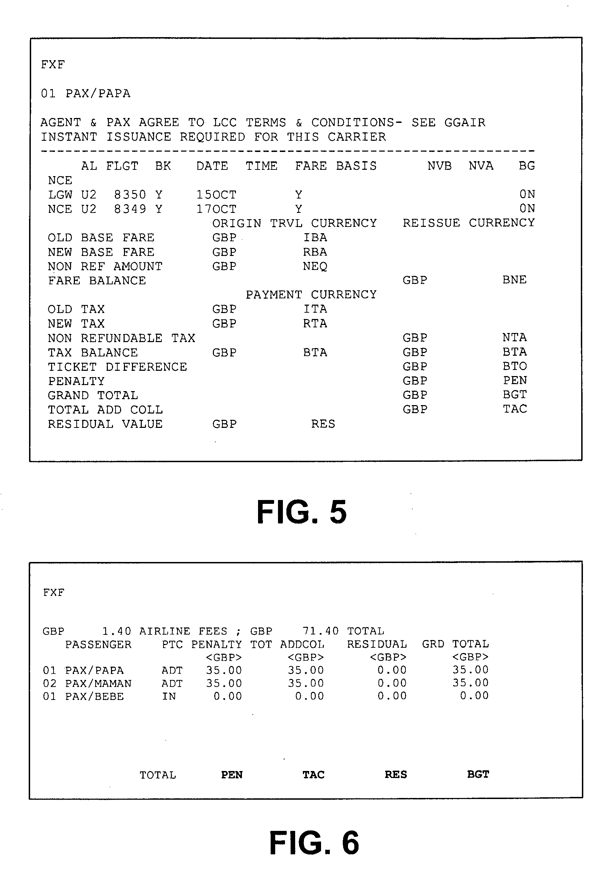

Fig. 5, for example, illustrates an example result output from an FXF command on a representative text-based user interface display, and including the various amounts discussed above. Fig. 6, in turn, illustrates a similar display where multiple passengers are involved, whereby totals are provided for all passengers for penalty, total additional collection, residual value, and grand total.

In some embodiments, additional amounts, which may not be displayed in an output, may also be computed, e.g., for generating a TST. For example, a TST amount may be calculated as follows:

$$TST = Max(BTO,0).$$

In addition, in some embodiments, separate use cases may be supported for particular low cost carriers and/or booking classes. For example, when a re-price request is issued for a booking in a flexi fare class (Booking Class W), the amounts returned by some low cost carriers may differ. Some carriers, for example, may allow ticket exchanges to occur free of charge (no penalty), and as such, the low cost carrier system may return with old and new amounts equal to zero:

$$\underline{Segment\ Unchanged} = Original\ fare\ (SU),\ taxes\ (TU)$$

$$\underline{Segment\ Cancelled} = Fare\ 0.00 + Tax\ 0.00$$

$$\underline{Segment\ New} = Fare\ 0.00 + Tax\ 0.00$$

The amounts per segment in such instances may be adjusted or corrected in order to not impact calculations. For example, the old fare and tax amount (IBA and ITA) may be set to original values retrieved from the PNR image from issuance, and the new fare and tax amount (RBA and RTA) may be set to equal the old amounts (IBA and ITA). The other calculations may follow the process described in the standard use case above.

In addition, some low cost carriers may not support changes of currency. Therefore, in such instances, it may not be necessary to convert amounts between different currencies.

Additional information may also be provided to the low cost module 176 in some embodiments to enable generation of a fare calculation line. For example, in some embodiments it may be desirable to generate a price per segment as well as flown itinerary details and a price per segment retrieved from the PNR image from last issuance.

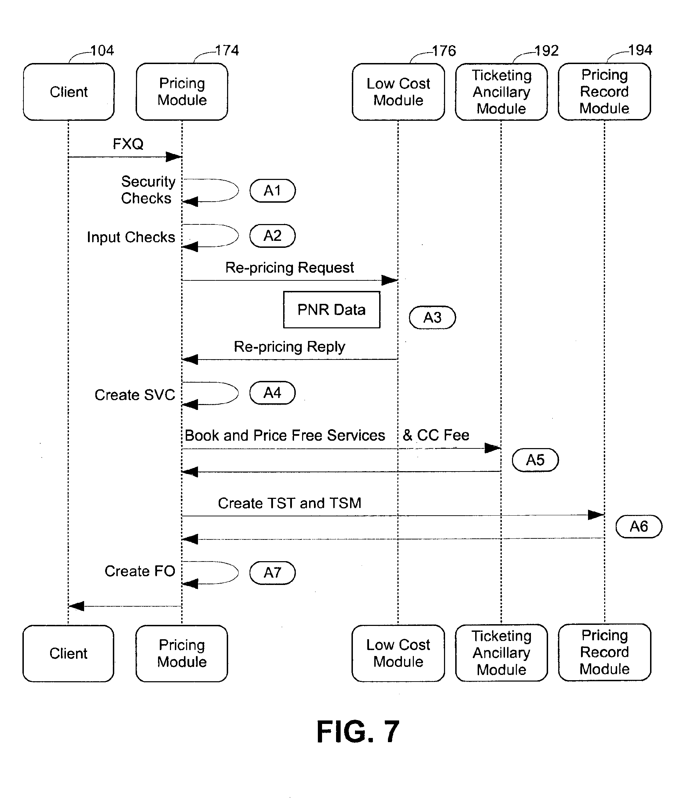

Now turning to Fig. 7, this figure illustrates a sequence diagram showing the exchange of messages between the various components in reservation system 102 when performing a re-pricing operation consistent with the invention. For the purposes of this discussion, a Ticketing Ancillary Module component 192 and a Pricing Record Module component 194 may be considered to be backend components that are optionally incorporated into low cost module 176 and are used to create standard elements in a PNR.

To perform an FXQ operation, steps A1-A7 may be performed, as follows:

Check security (Step A1): ensure that user is allowed to perform the requested operation with a given low cost carrier. Security may be handled, for example, at the carrier level.

Check input syntax and format (Step A2): ensure request complies with transaction defined layout.

Handle Re-pricing request (Step A3). In this step, PNR checks are performed to ensure that the PNR context is correct for re-pricing, and the last issued booking is retrieved. As a ticket is not available, the PNR modifications performed since the last issuance are determined. Eligibility is also checked in this step to ensure that the last issued booking was issued from the current PNR, and if the pricing request covers all passengers. A reservation difference between the current and the last issued bookings is then performed, and a re-pricing request is issued to low cost module 176. Pricing data is retrieved from the low cost carrier system, and standard amounts are calculated and returned as a reply to the re-pricing request.

Thereafter, in steps A4-A7, the system prepares for re-issuance by creating necessary or desired PNR elements and/or pricing records, e.g., SVC (step A4) and FO (step A7) elements, and/or pricing records (TST and TSM, steps A5-A6). For low cost carriers, however, generally no availability check or e-ticket retrieval is performed, as would otherwise occur for operations associated with standard carriers.

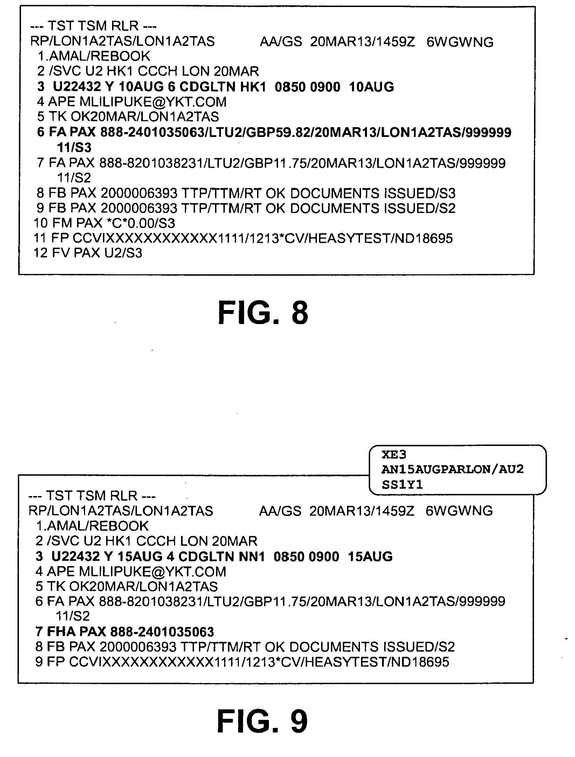

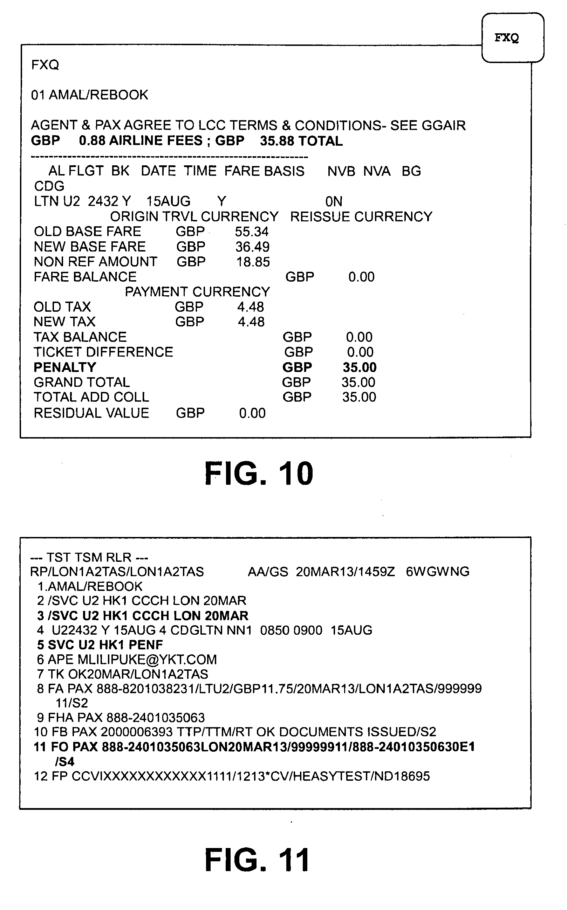

Now turning to Figs. 8-19, an example itinerary change is illustrated by way of textual displays generated in response to user input, e.g., via a travel reservation device. Fig. 8, in particular, illustrates a PNR prior to an itinerary change, and it will be appreciated that the PNR includes a low cost carrier flight segment scheduled for August 10 (Lines 3 and 6). Fig. 9 illustrates the result of a rebook itinerary operation (see bubble on top right for actual command), which results in a change in the low cost carrier flight segment to August 15 (Lines 3 and 7). Fig. 10 illustrates the result of an FXQ operation handled in the manner described above, which includes a penalty of 35.00 GBP as well as a non-refundable amount of 18.85 GBP due to the lower cost of the new flight segment, which is not considered refundable because of a carrier commercial policy. The amounts shown in Fig. 10 are generated using the calculations described above.

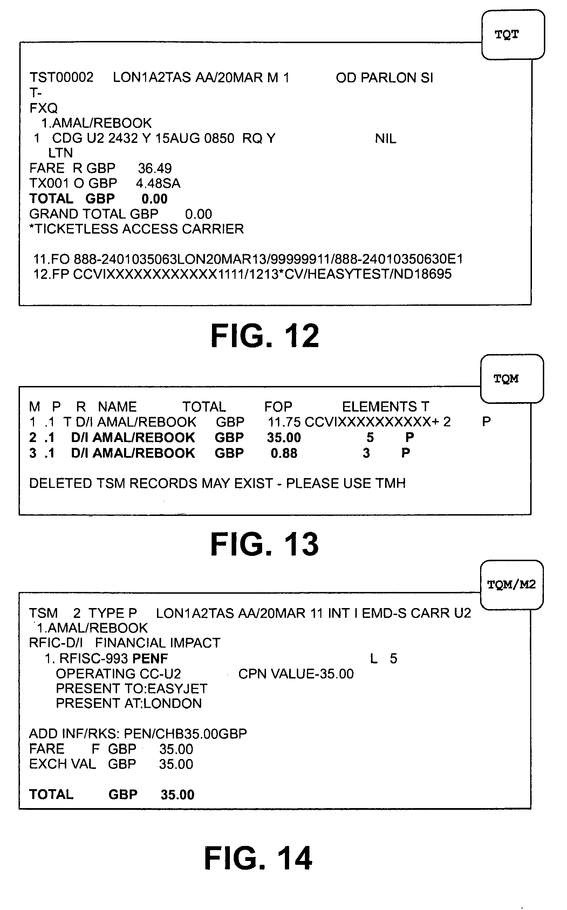

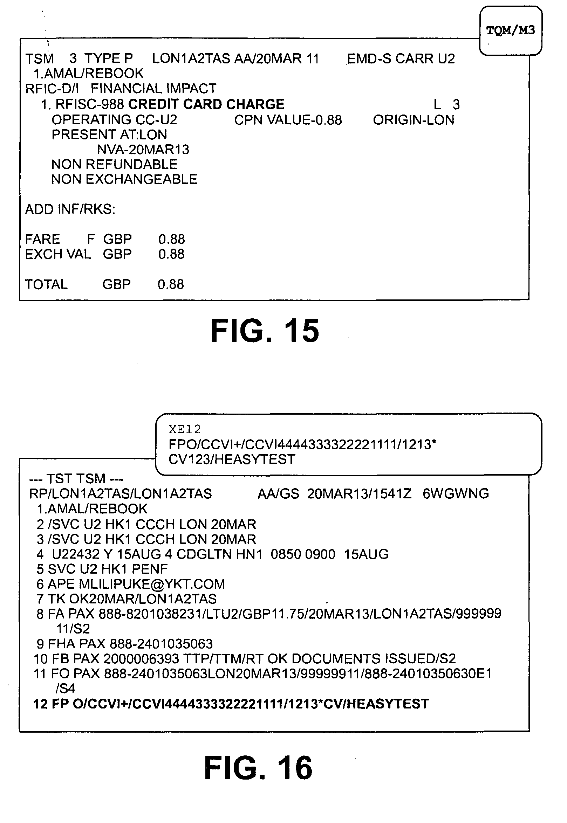

Fig. 11 next illustrates the changes made to the PNR as a result of the FXQ operation, whereby SVC and FO elements are newly generated (Lines 3, 5 and 11). Figs. 12-15 also illustrate pricing records generated as a result of the operation. Fig. 12, in particular, illustrates a TST record, and Fig. 13 illustrates an overview of the different pricing records created (line 1 corresponds to the previous credit card fee for the first pricing/issuance, line 2 corresponds to a newly created penalty fee, and line 3 corresponds to a newly created credit card fee). Fig. 14 illustrates a penalty TSM, and Fig. 15 illustrates a credit card fee TSM.

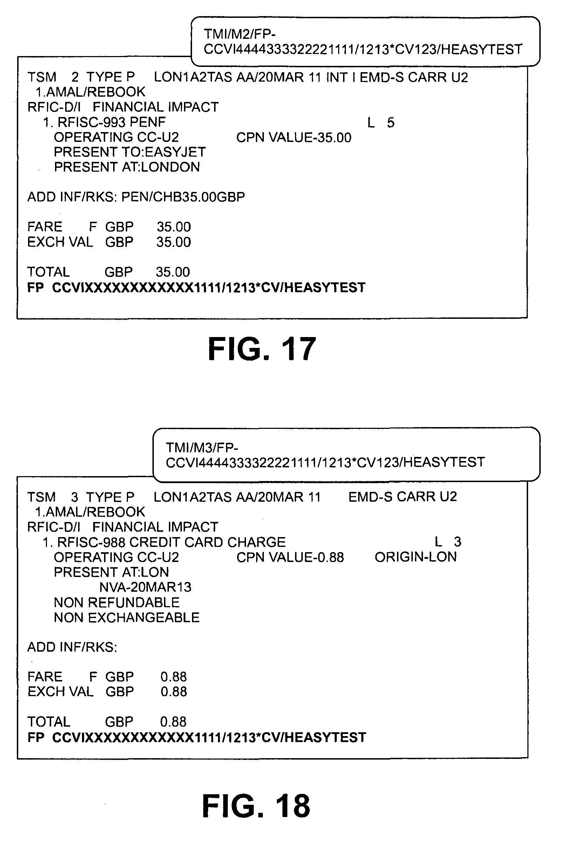

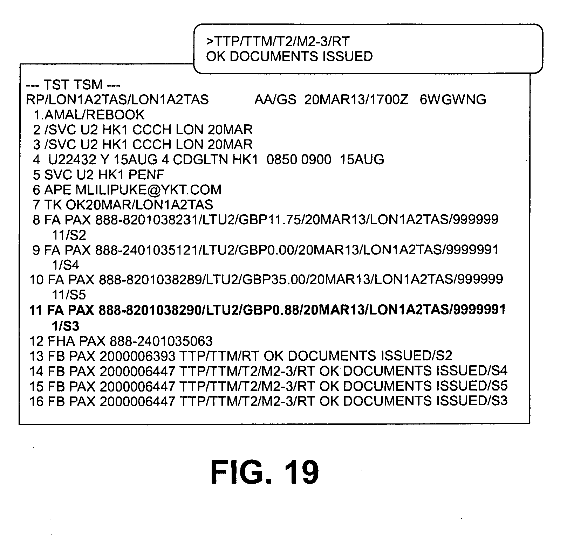

Fig. 16 next illustrates additional changes made to the PNR as a result of entering a form of payment (FOP) for handling the additional collection (Line 12). As shown in Figs. 17 and 18, this form of payment is also entered in the generated pricing records of Figs. 14 and 15. Finally, Fig. 19 illustrates the PNR after reissuance of the travel itinerary.

The herein-described embodiments provide a number of desirable features. For example, a seamless flow may be provided between both low cost and standard carriers, by providing similar levels of information, e.g., the total amounts to be paid for an air segment exchange, the balance between the original and the new applicable fares and the old and the new taxes, the penalty to collect (if applicable) and the credit card fee amount related to the carrier policy in case of exchange. In addition, records may be automatically generated to facilitate reissuance, e.g., original in exchange for element population to reference the previous and original tickets, a TST containing the new amounts to be collected with the fare calculation line generated, a TSM record created for the penalty fee (if applicable), and a TSM record created for the credit card fee (if applicable).

It will be appreciated that some of the features of the example embodiments of this invention may be used without the corresponding use of other features. In addition, various additional modifications may be made without departing from the spirit and scope of the invention. Therefore, the invention lies in the claims hereinafter appended.

**Claims**

1. A method for re-pricing a low cost carrier travel itinerary, the method comprising:

   accessing a pricing engine of the low cost carrier to retrieve pricing information for at least one changed element in the low cost carrier travel itinerary; and
   generating at least one pricing record and populating a passenger name record associated with the low cost carrier travel itinerary using the retrieved pricing information.

2. The method of claim 1, further comprising determining the at least one changed element by comparing a current version of the passenger name record with a previous version of the passenger name record.

3. The method of claim 2, wherein determining the at least one changed element further includes retrieving the previous version of the passenger name record from a history database, wherein the previous version of the passenger name record represents a most recent issuance of the travel itinerary, and wherein the current version of the passenger name record includes at least one change to the travel itinerary since the most recent issuance of the travel itinerary.

4. The method of any of claims 1 to 3, wherein generating the at least one pricing record includes generating a Transitional Stored Ticket record.

5. The method of any of claims 1 to 4, wherein generating the at least one pricing record includes generating a Transitional Stored Miscellaneous record.

6. The method of any of claims 1 to 5, wherein populating the passenger name record includes populating the passenger name record with at least one of an old document element, a credit card element or a form-of-payment element.

7. The method of any of claims 1 to 6, further comprising converting the retrieved pricing information into a format used in a standard carrier itinerary change operation.

8. The method of any of claims 1 to 7, wherein the retrieved pricing information includes one or more of

   - an original fare for an unchanged segment, abbreviated with SU,
   - an original tax for an unchanged segment, abbreviated with TU,
   - an original fare for a cancelled segment, abbreviated with SX,

- an original tax for a canceled segment, abbreviated with TX,
- a new fare for a new segment, abbreviated with SN,
- a tax for a new segment, abbreviated with TN,
- a penalty amount, abbreviated with PEN,
- a non-refundable amount, abbreviated with NEQ, and
- a non-refundable tax amount, abbreviated with NTA.

9. The method of claim 8, wherein converting the retrieved pricing information includes determining one or more of

- an issue base amount, abbreviated with IBA, as a sum of SU and an absolute value of SX,
- a reissue base amount, abbreviated with RBA, as a sum of SU and SN,
- a balance net fare amount, abbreviated with BNE, as RBA - IBA + NEQ,
- an issue tax amount, abbreviated with ITA, as a sum of TU and an absolute value of TX,
- a reissue tax amount, abbreviated with RTA, as a sum of TU and TN, and
- a balance tax amount, abbreviated with BTA, as RTA - ITA + NTA.

10. The method of claim 9, wherein converting the retrieved pricing information further includes determining one or more of

- a balance ticket total amount, abbreviated with BTO, as a sum of BNE and BTA, and
- a balance ticket grand total amount, abbreviated with BGT, as a sum of BTO and PEN.

11. An apparatus, comprising:

at least one processing unit; and
program code configured upon execution by the at least one processing unit to re-price a low cost carrier travel itinerary by accessing a pricing engine of the low cost carrier to retrieve pricing information for at least one changed element in the low cost carrier travel itinerary, and generating at least one pricing record and populating a passenger name record associated with the low cost carrier travel itinerary using the retrieved pricing information.

12. The apparatus of claim 11, wherein the program code is further configured upon execution by the at least one processing unit to perform any of the methods of claims 2 to 10.

13. A computer program configured upon execution by at least one processing unit to re-price a low cost carrier travel itinerary by accessing a pricing engine of the low cost carrier to retrieve pricing information for at least one changed element in the low cost carrier travel itinerary, and generating at least one pricing record and populating a passenger name record associated with the low cost carrier travel itinerary using the retrieved pricing information.

14. The computer program of claim 13 further configured upon execution by the at least one processing unit to perform any of the methods of claims 2 to 10.

# FIG. 1

TRAVEL RESERVATION DEVICE 104

RESERVATION SYSTEM 102

NETWORK 103

INVENTORY SYSTEM(S) 106

LOW-COST CARRIER SYSTEM(S) 108

# FIG. 2

## RESERVATION SYSTEM 102

### MEMORY 162

OS 170

RESERVATION MODULE 172

PRICING MODULE 174

LOW COST MODULE 176

PRICING ENGINE DATABASE 180

PNR MODULE 178

PNR HISTORY DATABASE 182

PROCESSOR 160

USER I/F 164

NETWORK I/F 168

**FIG. 3**

FIG. 4

```
FXF

01 PAX/PAPA

AGENT & PAX AGREE TO LCC TERMS & CONDITIONS- SEE GGAIR
INSTANT ISSUANCE REQUIRED FOR THIS CARRIER
------------------------------------------------------------
     AL FLGT BK    DATE  TIME  FARE BASIS      NVB  NVA   BG
 NCE
 LGW U2 8350 Y   15OCT        Y                             ON
 NCE U2 8349 Y   17OCT        Y                             ON
                  ORIGIN TRVL CURRENCY   REISSUE CURRENCY
 OLD BASE FARE        GBP        IBA
 NEW BASE FARE        GBP        RBA
 NON REF AMOUNT       GBP        NEQ
 FARE BALANCE                              GBP        BNE
                    PAYMENT CURRENCY
 OLD TAX             GBP        ITA
 NEW TAX             GBP        RTA
 NON REFUNDABLE TAX                        GBP        NTA
 TAX BALANCE         GBP        BTA        GBP        BTA
 TICKET DIFFERENCE                         GBP        BTO
 PENALTY                                   GBP        PEN
 GRAND TOTAL                               GBP        BGT
 TOTAL ADD COLL                            GBP        TAC
 RESIDUAL VALUE      GBP        RES
```

# FIG. 5

```
FXF


GBP     1.40 AIRLINE FEES ; GBP    71.40 TOTAL
     PASSENGER      PTC PENALTY TOT ADDCOL    RESIDUAL  GRD TOTAL
                        <GBP>       <GBP>      <GBP>        <GBP>
01 PAX/PAPA        ADT    35.00       35.00      0.00        35.00
02 PAX/MAMAN       ADT    35.00       35.00      0.00        35.00
01 PAX/BEBE        IN      0.00        0.00      0.00         0.00




           TOTAL       PEN        TAC        RES        BGT
```

# FIG. 6

**FIG. 7**

```
--- TST TSM RLR ---
RP/LON1A2TAS/LON1A2TAS          AA/GS  20MAR13/1459Z  6WGWNG
  1.AMAL/REBOOK
  2 /SVC U2 HK1 CCCH LON 20MAR
  3  U22432 Y 10AUG 6 CDGLTN HK1  0850 0900  10AUG
  4 APE MLILIPUKE@YKT.COM
  5 TK OK20MAR/LON1A2TAS
  6 FA PAX 888-2401035063/LTU2/GBP59.82/20MAR13/LON1A2TAS/999999
     11/S3
  7 FA PAX 888-8201038231/LTU2/GBP11.75/20MAR13/LON1A2TAS/999999
     11/S2
  8 FB PAX 2000006393 TTP/TTM/RT OK DOCUMENTS ISSUED/S3
  9 FB PAX 2000006393 TTP/TTM/RT OK DOCUMENTS ISSUED/S2
 10 FM PAX *C*0.00/S3
 11 FP CCVIXXXXXXXXXXXXX1111/1213*CV/HEASYTEST/ND18695
 12 FV PAX U2/S3
```

# FIG. 8

```
                                        ┌──────────────────────┐
                                        │ XE3                  │
                                        │ AN15AUGPARLON/AU2    │
                                        │ SS1Y1                │
                                        └──────────────────────┘
--- TST TSM RLR ---
RP/LON1A2TAS/LON1A2TAS          AA/GS  20MAR13/1459Z  6WGWNG
  1.AMAL/REBOOK
  2 /SVC U2 HK1 CCCH LON 20MAR
  3  U22432 Y 15AUG 4 CDGLTN NN1  0850 0900  15AUG
  4 APE MLILIPUKE@YKT.COM
  5 TK OK20MAR/LON1A2TAS
  6 FA PAX 888-8201038231/LTU2/GBP11.75/20MAR13/LON1A2TAS/999999
     11/S2
  7 FHA PAX 888-2401035063
  8 FB PAX 2000006393 TTP/TTM/RT OK DOCUMENTS ISSUED/S2
  9 FP CCVIXXXXXXXXXXXXX1111/1213*CV/HEASYTEST/ND18695
```

# FIG. 9

```
FXQ                                                        ┌──────┐
                                                           │ FXQ  │
┌────────────────────────────────────────────────────────┴──────┘
│ FXQ
│
│ 01 AMAL/REBOOK
│
│ AGENT & PAX AGREE TO LCC TERMS & CONDITIONS- SEE GGAIR
│ GBP    0.88 AIRLINE FEES ; GBP    35.88 TOTAL
│ ------------------------------------------------------------
│   AL FLGT  BK  DATE  TIME  FARE BASIS     NVB  NVA  BG
│ CDG
│ LTN U2 2432 Y   15AUG    Y                  ON
│           ORIGIN TRVL CURRENCY  REISSUE CURRENCY
│ OLD BASE FARE       GBP   55.34
│ NEW BASE FARE       GBP   36.49
│ NON REF AMOUNT      GBP   18.85
│ FARE BALANCE                    GBP     0.00
│           PAYMENT CURRENCY
│ OLD TAX             GBP    4.48
│ NEW TAX             GBP    4.48
│ TAX BALANCE                     GBP     0.00
│ TICKET DIFFERENCE               GBP     0.00
│ PENALTY                         GBP    35.00
│ GRAND TOTAL                     GBP    35.00
│ TOTAL ADD COLL                  GBP    35.00
│ RESIDUAL VALUE      GBP    0.00
```

# FIG. 10

```
--- TST TSM RLR ---
RP/LON1A2TAS/LON1A2TAS         AA/GS  20MAR13/1459Z  6WGWNG
  1.AMAL/REBOOK
  2 /SVC U2 HK1 CCCH LON 20MAR
  3 /SVC U2 HK1 CCCH LON 20MAR
  4  U22432 Y 15AUG 4 CDGLTN NN1  0850 0900  15AUG
  5 SVC U2 HK1 PENF
  6 APE MLILIPUKE@YKT.COM
  7 TK OK20MAR/LON1A2TAS
  8 FA PAX 888-8201038231/LTU2/GBP11.75/20MAR13/LON1A2TAS/999999
    11/S2
  9 FHA PAX 888-2401035063
 10 FB PAX 2000006393 TTP/TTM/RT OK DOCUMENTS ISSUED/S2
 11 FO PAX 888-2401035063LON20MAR13/99999911/888-24010350630E1
    /S4
 12 FP CCVIXXXXXXXXXXXXX1111/1213*CV/HEASYTEST/ND18695
```

# FIG. 11

```
                                                                          ┌──────┐
                                                                          │ TQT  │
                                                                          └──────┘
┌────────────────────────────────────────────────────────────────────────────────┐
│                                                                                  │
│  TST00002    LON1A2TAS AA/20MAR M 1          OD PARLON SI                         │
│  T-                                                                              │
│  FXQ                                                                             │
│    1.AMAL/REBOOK                                                                 │
│    1   CDG U2 2432 Y 15AUG 0850  RQ Y                    NIL                      │
│      LTN                                                                         │
│  FARE  R GBP     36.49                                                           │
│  TX001 O GBP     4.48SA                                                          │
│  TOTAL  GBP      0.00                                                            │
│  GRAND TOTAL GBP      0.00                                                       │
│  *TICKETLESS ACCESS CARRIER                                                      │
│                                                                                  │
│   11.FO 888-2401035063LON20MAR13/99999911/888-24010350630E1                      │
│   12.FP CCVIXXXXXXXXXXXXX1111/1213*CV/HEASYTEST/ND18695                           │
│                                                                                  │
└────────────────────────────────────────────────────────────────────────────────┘
```

# FIG. 12

```
                                                                          ┌──────┐
                                                                          │ TQM  │
                                                                          └──────┘
┌────────────────────────────────────────────────────────────────────────────────┐
│  M  P  R  NAME        TOTAL       FOP        ELEMENTS T                           │
│  1 .1  T D/I AMAL/REBOOK    GBP    11.75 CCVIXXXXXXXXXX+ 2         P               │
│  2 .1    D/I AMAL/REBOOK    GBP    35.00        5       P                         │
│  3 .1    D/I AMAL/REBOOK    GBP    0.88         3       P                         │
│                                                                                  │
│  DELETED TSM RECORDS MAY EXIST - PLEASE USE TMH                                   │
└────────────────────────────────────────────────────────────────────────────────┘
```

# FIG. 13

```
                                                                        ┌────────┐
                                                                        │ TQM/M2 │
                                                                        └────────┘
┌────────────────────────────────────────────────────────────────────────────────┐
│  TSM   2  TYPE P    LON1A2TAS AA/20MAR 11 INT I EMD-S CARR U2                     │
│    1.AMAL/REBOOK                                                                 │
│  RFIC-D/I  FINANCIAL IMPACT                                                      │
│    1. RFISC-993 PENF                                    L  5                      │
│       OPERATING CC-U2        CPN VALUE-35.00                                      │
│       PRESENT TO:EASYJET                                                         │
│       PRESENT AT:LONDON                                                          │
│                                                                                  │
│  ADD INF/RKS: PEN/CHB35.00GBP                                                    │
│  FARE     F GBP    35.00                                                         │
│  EXCH VAL  GBP     35.00                                                         │
│                                                                                  │
│  TOTAL     GBP     35.00                                                         │
└────────────────────────────────────────────────────────────────────────────────┘
```

# FIG. 14

TQM/M3

TSM   3  TYPE P    LON1A2TAS AA/20MAR 11      EMD-S CARR U2
  1.AMAL/REBOOK
RFIC-D/I  FINANCIAL IMPACT
    1. RFISC-988 **CREDIT CARD CHARGE**                            L  3
        OPERATING CC-U2          CPN VALUE-0.88      ORIGIN-LON
        PRESENT AT:LON
                NVA-20MAR13
        NON REFUNDABLE
        NON EXCHANGEABLE

ADD INF/RKS:

FARE    F GBP     0.88
EXCH VAL  GBP     0.88

TOTAL      GBP     0.88

# FIG. 15

XE12
FPO/CCVI+/CCVI4444333322221111/1213*
CV123/HEASYTEST

--- TST TSM ---
RP/LON1A2TAS/LON1A2TAS          AA/GS  20MAR13/1541Z  6WGWNG
  1.AMAL/REBOOK
  2 /SVC U2 HK1 CCCH LON 20MAR
  3 /SVC U2 HK1 CCCH LON 20MAR
  4  U22432 Y 15AUG 4 CDGLTN HN1  0850 0900  15AUG
  5 SVC U2 HK1 PENF
  6 APE MLILIPUKE@YKT.COM
  7 TK OK20MAR/LON1A2TAS
  8 FA PAX 888-8201038231/LTU2/GBP11.75/20MAR13/LON1A2TAS/999999
      11/S2
  9 FHA PAX 888-2401035063
10 FB PAX 2000006393 TTP/TTM/RT OK DOCUMENTS ISSUED/S2
11 FO PAX 888-2401035063LON20MAR13/99999911/888-24010350630E1
      /S4
**12 FP O/CCVI+/CCVI4444333322221111/1213*CV/HEASYTEST**

# FIG. 16

TMI/M2/FP-
CCVI4444333322221111/1213*CV123/HEASYTEST

```
TSM   2 TYPE P    LON1A2TAS AA/20MAR 11 INT I EMD-S CARR U2
  1.AMAL/REBOOK
RFIC-D/I   FINANCIAL IMPACT
    1. RFISC-993 PENF                                  L  5
       OPERATING CC-U2          CPN VALUE-35.00
       PRESENT TO:EASYJET
       PRESENT AT:LONDON

ADD INF/RKS: PEN/CHB35.00GBP

FARE     F GBP    35.00
EXCH VAL  GBP    35.00

TOTAL     GBP    35.00
FP  CCVIXXXXXXXXXXXXX1111/1213*CV/HEASYTEST
```

# FIG. 17

TMI/M3/FP-
CCVI4444333322221111/1213*CV123/HEASYTEST

```
TSM   3 TYPE P    LON1A2TAS AA/20MAR 11      EMD-S CARR U2
  1.AMAL/REBOOK
RFIC-D/I   FINANCIAL IMPACT
    1. RFISC-988 CREDIT CARD CHARGE                    L  3
       OPERATING CC-U2       CPN VALUE-0.88    ORIGIN-LON
       PRESENT AT:LON
            NVA-20MAR13
       NON REFUNDABLE
       NON EXCHANGEABLE

ADD INF/RKS:

FARE     F GBP    0.88
EXCH VAL  GBP    0.88

TOTAL     GBP    0.88
FP  CCVIXXXXXXXXXXXXX1111/1213*CV/HEASYTEST
```

# FIG. 18

```
>TTP/TTM/T2/M2-3/RT
OK DOCUMENTS ISSUED
```

```
--- TST TSM ---
RP/LON1A2TAS/LON1A2TAS          AA/GS  20MAR13/1700Z  6WGWNG
 1.AMAL/REBOOK
 2 /SVC U2 HK1 CCCH LON 20MAR
 3 /SVC U2 HK1 CCCH LON 20MAR
 4  U22432 Y 15AUG 4 CDGLTN HK1  0850 0900  15AUG
 5 SVC U2 HK1 PENF
 6 APE MLILIPUKE@YKT.COM
 7 TK OK20MAR/LON1A2TAS
 8 FA PAX 888-8201038231/LTU2/GBP11.75/20MAR13/LON1A2TAS/999999
     11/S2
 9 FA PAX 888-2401035121/LTU2/GBP0.00/20MAR13/LON1A2TAS/9999991
     1/S4
10 FA PAX 888-8201038289/LTU2/GBP35.00/20MAR13/LON1A2TAS/999999
     11/S5
11 FA PAX 888-8201038290/LTU2/GBP0.88/20MAR13/LON1A2TAS/9999991
     1/S3
12 FHA PAX 888-2401035063
13 FB PAX 2000006393 TTP/TTM/RT OK DOCUMENTS ISSUED/S2
14 FB PAX 2000006447 TTP/TTM/T2/M2-3/RT OK DOCUMENTS ISSUED/S4
15 FB PAX 2000006447 TTP/TTM/T2/M2-3/RT OK DOCUMENTS ISSUED/S5
16 FB PAX 2000006447 TTP/TTM/T2/M2-3/RT OK DOCUMENTS ISSUED/S3
```

# FIG. 19

Europäisches
Patentamt

European
Patent Office

Office européen
des brevets

# EUROPEAN SEARCH REPORT

Application Number

EP 14 29 0203

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 839 679 B1 (LYNCH MICHAEL F [US] ET AL) 4 January 2005 (2005-01-04) * abstract * ----- | 1-14 | INV. G06Q10/02 |
| X | US 2004/153348 A1 (GARBACK BRENT J [US]) 5 August 2004 (2004-08-05) * abstract * ----- | 1-14 | |
| X | US 2005/033613 A1 (PATULLO PASQUALE A [US] ET AL) 10 February 2005 (2005-02-10) * abstract * ----- | 1-14 | |
| X | US 2014/172472 A1 (FLORIMOND CEDRIC [FR] ET AL) 19 June 2014 (2014-06-19) * abstract * ----- | 1-14 | |

TECHNICAL FIELDS
SEARCHED      (IPC)

G06Q

The present search report has been drawn up for all claims

| Place of search | Date of completion of the search | Examiner |
|---|---|---|
| Munich | 10 December 2014 | Heselius, Per |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 14 29 0203

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2014

| Patent document cited in search report | | Publication date | Patent family member(s) | Publication date |
|---|---|---|---|---|
| US 6839679 | B1 | 04-01-2005 | NONE | |
| US 2004153348 | A1 | 05-08-2004 | NONE | |
| US 2005033613 | A1 | 10-02-2005 | NONE | |
| US 2014172472 | A1 | 19-06-2014 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 14079035 B